Europäisches Patentamt

European Patent Office

Office européen des brevets

(11) Veröffentlichungsnummer: **0 097 945**
**B1**

(19)

(12) **EUROPÄISCHE PATENTSCHRIFT**

(45) Veröffentlichungstag der Patentschrift:
**01.06.88**

(21) Anmeldenummer: **83106250.0**

(22) Anmeldetag: **27.06.83**

(51) Int. Cl.⁴: **H 01 G 4/18,** H 01 G 4/24

(54) Verfahren zur Herstellung von regenerierfähigen Dielektrikumschichten durch Polymerisation von Gasen.

(30) Priorität: **30.06.82 DE 3224426**

(43) Veröffentlichungstag der Anmeldung:
**11.01.84 Patentblatt 84/2**

(45) Bekanntmachung des Hinweises auf die Patenterteilung:
**01.06.88 Patentblatt 88/22**

(84) Benannte Vertragsstaaten:
**DE FR GB IT SE**

(56) Entgegenhaltungen:
**FR - E - 76 669**
**US - A - 2 865 795**

(73) Patentinhaber: **Siemens Aktiengesellschaft Berlin und München, Wittelsbacherplatz 2, D-8000 München 2 (DE)**

(72) Erfinder: **Pachonik, Horst, Dipl.-Phys., Lindenring 135, D-8028 Taufkirchen (DE)**
Erfinder: **Seebacher, Gerhard, Dr., Dipl.-Phys., Bercht-Brecht-Allee 10, D-8000 München 83 (DE)**

## Beschreibung

Die Erfindung betrifft ein Verfahren zur Herstellung von regenerierfähigen Dielektrikumsschichten durch Polymerisation von Gasen mittels Glimmentladung auf einem Substrat, insbesondere für die Herstellung von elektrischen Vielschichtkondensatoren, bei dem monomere Perfluorkohlenstoffe der Summenformel $(CF_2)_n$, mit n = 2 bis 10, und/oder die entsprechenden perfluorierten zyklischen Alkane in den Glimmentladungsbereich eingeblasen werden.

Aus der DE-A-2 907 775 ist ein Verfahren zur Herstellung von Dielektrikumsschichten aus Glimmpolymerisat bekannt, bei dem aus Ausgangsmonomeren, die in Form eines Gemisches aus perfluorierten Kohlenwasserstoff mit unsubstituierten Dienen vorliegen, hochtemperaturbeständige Dielektrikumsschichten hergestellt werden. Der Ausdruck monomer bedeutet in diesem Zusammenhang ein Molekül oder eine Verbindung von relativ niedrigem Molekulargewicht und einfacher Struktur, welche unter dem Einfluss einer Glimmentladung in eine Polymerform umgewandelt werden durch Herstellung einer Verbindung mit sich selbst oder ähnlichen Molekülen bzw. Verbindungen.

Die Glimmpolymerisation wird dabei unter einem Druck von etwa 0,2 bis 2 mbar und bei einer Frequenz der angelegten Spannung von über 5 MHz durchgeführt.

Die eingangs genannten Vielschichtkondensatoren werden hergestellt, indem auf einem Substrat abwechselnd dünne, aufgedampfte oder aufgesputterte, Metallschichten und die glimmpolymeren Dielektrikumsschichten erzeugt werden. Bei den bekannten, hochtemperaturbeständigen Dielektrikumsschichten hat sich jedoch herausgestellt, dass sie gegenüber einem Tauchlötvorgang empfindlich sind und hierbei mechanisch leicht beschädigt werden können, wobei jene Dielektrikumsbereiche besonders kritisch sind, über denen sich aufgedampfte oder aufgesputterte Metallbeläge befinden.

Aufgabe der Erfindung ist es daher, ein Verfahren zur Herstellung von tauchlötfähigen Dielektrikumsschichten anzugeben, die nicht nur eine Lagerung bei Temperaturen zwischen 250 und 300 °C kurzzeitig ohne mechanische und elektrische Veränderungen überstehen, sondern die auch bei Temperaturschocks beim Eintauchen in ein Schwallbad nahezu unverändert bleiben.

Diese Aufgabe wird bei dem eingangs genannten Verfahren erfindungsgemäss dadurch gelöst, dass gleichzeitig mit den Monomeren ein Siloxan oder ein Silazan oder ein Gemisch von Siloxanen und/oder Silazanen in den Glimmentladungsbereich eingeblasen werden.

Vorteilhafterweise werden bei dem erfindungsgemässen Verfahren als Monomere der Summenformel $(CF_2)_n$ perfluoriertes Propen, Buten, Hexen, Okten, Decen und als die entsprechenden perfluorierten zyklischen Alkane perfluoriertes Cyclobutan, Cyclohexan, Dimethylcyclohexan sowie Siloxane und/oder Silazane der folgenden Zusammensetzung verwendet:

$CH_3 (CH_3HSiO)_n SiH (CH_3)_2$ mit n = 2, 3, 4 bzw. 5
$(CH_3)_3 SiO Si (CH_3)_3$
$CH_3 [(CH_3)_2 SiO]_n Si (CH_3)_3$ mit n = 2, 3, 4 bzw. 5
$(CH_3)_3 SiN HCH_3$
$(CH_3)_3 SiN HC_2H_5$
$(CH_3)_3 SiN (C_2H_5)_2$
$[(CH_3)_3 Si]_2 NH$
$[(CH_3)_3 Si]_2 NCH_3$
$CH_3 [(CH_3)_2 SiNH]_n Si (CH_3)_3$ n = 2, 3
$[C_2H_5 (CH_3)_2 Si]_2 NH$
$[(CH_3)_3 SiNH] Si (CH_3)_2$.

Bei einer bevorzugten Ausführungsform beträgt die Menge der eingeblasenen Siloxane und/oder Silazane 3 bis 15 Vol%.

Die nach dem erfindungsgemässen Verfahren hergestellten Dielektrikumsschichten zeigen einerseits bei höheren Temperaturen geringe Oxidationsneigung und andererseits weisen sie beim Tauchlöten keine Rissbildung auf.

Um flexible, temperaturbeständige Schichten mit guten dielektrischen Eigenschaften zu erhalten, ist es in einer Weiterbildung der Erfindung vorteilhaft, zusätzlich noch Diene und/oder Alkane und/oder Cykloalkane in den Glimmentladungsbereich einzublasen.

Beispielsweise werden Diene mit der Summenformel $C_n H_{(2n-2)}$ mit einer Molekularmasse $\leqslant 82$ und vorzugsweise konjugierter Doppelbildung wie 1, 3 Butadien, 1, 3 Pentadien, 2-Methylbutadien (1, 3), 1, 3 Hexadien, 2, 4 Hexadien, 2-Methylpentadien (1, 3), 2, 3 -Dimethylbutadien (1, 3) verwendet. Als Alkane der Summenformel $(CH_2)_n$ kann beispielsweise einer der Stoffe Buten, Penten, Hexen, Hepten, Octen sowie ein entsprechendes Zykloalkan Verwendung finden.

## Patentansprüche

1. Verfahren zur Herstellung von regenerierfähigen Dielektrikumsschichten durch Polymerisation von Gasen mittels Glimmentladung auf einem Substrat, insbesondere für die Herstellung von elektrischen Vielschichtkondensatoren, bei dem monomere Perfluorkohlenstoffe der Summenformel $(CF_2)_n$, mit n = 2 bis 10, und/oder die entsprechenden perfluorierten zyklischen Alkane in den Glimmentladungsbereich eingeblasen werden, dadurch gekennzeichnet, dass gleichzeitig mit den Monomeren ein Siloxan oder ein Silazan oder ein Gemisch von Siloxanen und/oder Silazanen in den Glimmentladungsbereich eingeblasen werden.

2. Verfahren nach Anspruch 1, gekennzeichnet durch die Verwendung von Siloxanen und/oder Silazanen folgender Zusammensetzung:

$CH_3 (CH_3HSiO)_n SiH (CH_3)_2$ mit n = 2, 3, 4 bzw. 5
$(CH_3)_3 SiO Si (CH_3)_3$
$CH_3 [(CH_3)_2 SiO]_n Si (CH_3)_3$ mit n = 2, 3, 4 bzw. 5
$(CH_3)_3 SiN HCH_3$
$(CH_3)_3 SiN HC_2H_5$
$(CH_3)_3 SiN (C_2H_5)_2$
$[(CH_3)_3 Si]_2 NH$
$[(CH_3)_3 Si]_2 NCH_3$

$CH_3 [(CH_3)_2 SiNH]_n Si (CH_3)_3$ n = 2, 3
$[C_2H_5 (CH_3)_2 Si]_2$ NH
$[(CH_3)_3 SiNH] Si (CH_3)_2$.

3. Verfahren nach Anspruch 2, dadurch gekennzeichnet, dass die Menge der eingeblasenen Siloxane und/oder Silazane 3 bis 15 Vol% beträgt.

4. Verfahren nach einem der vorhergehenden Ansprüche, dadurch gekennzeichnet, dass zusätzlich Diene und/oder Alkene und/oder Cykloalkane in den Glimmentladungsbereich eingeblasen werden.

## Claims

1. Method for the production of dielectric layers, which are capable of regeneration, by polymerisation of gases by means of glow discharge on a substrate, in particular for the production of electrical multilayer capacitors, in which method monomeric perfluorinated hydrocarbons of the empirical formula $(CF_2)_n$, with n = 2 to 10, and/or the corresponding perfluorinated cyclic alkanes are injected into the glow discharge region, characterized in that, simultaneously with the monomers, a siloxane or a silazane or a mixture of siloxanes and/or silazanes is injected into the glow discharge region.

2. Method according to Claim 1, characterized by the use of siloxanes and/or silazanes of the following composition:
$CH_3 (CH_3HSiO)_n SiH (CH_3)_2$ with n = 2, 3, 4 or 5
$(CH_3)_3 SiO Si (CH_3)_3$
$CH_3 [(CH_3)_2 SiO]_n Si (CH_3)_3$ with n = 2, 3, 4 or 5
$(CH_3)_3 SiN HCH_3$
$(CH_3)_3 SiN HC_2H_5$
$(CH_3)_3 SiN (C_2H_5)_2$
$[(CH_3)_3 Si]_2$ NH
$[(CH_3)_3 Si]_2 NCH_3$
$CH_3 [(CH_3)_2 SiNH]_n Si (CH_3)_3$ n = 2, 3
$[C_2H_5 (CH_3)_2 Si]_2$ NH
$[(CH_3)_3 SiNH] Si (CH_3)_2$.

3. Method according to Claim 2, characterized in that the quantity of siloxanes and/or silazanes injected is 3 to 15% by volume.

4. Method according to one of the preceding claims, characterized in that additionally dienes and/or alkenes and/or cycloalkanes are injected into the glow-discharge region.

## Revendications

1. Procédé de fabrication par polymérisation de gaz de couches diélectriques susceptibles d'être régénérées, au moyen d'une décharge luminescente sur un substrat, notamment pour la fabrication de condensateurs électriques à couches multiples, dans lequel on insuffle des hydrocarbures perfluorés monomères de formule générale $(CF_2)_n$, avec n = 2 à 10, et/ou les alcanes cycliques perfluorés correspondants, dans la région de décharge luminescente, caractérisé en ce qu'il consiste à insuffler, en même temps que les monomères, un siloxane ou un silazane ou un mélange de siloxane et/ou de silazane dans la région de la décharge luminescente.

2. Procédé suivant la revendication 1, caractérisé par l'utilisation de siloxanes et/ou de silazanes ayant la composition suivante:
$CH_3 (CH_3HSiO)_n SiH (CH_3)_2$ avec n = 2, 3, 4 ou 5
$(CH_3)_3 SiO Si (CH_3)_3$
$CH_3 [(CH_3)_2 SiO]_n Si (CH_3)_3$ avec n = 2, 3, 4 ou 5
$(CH_3)_3 SiN HCH_3$
$(CH_3)_3 SiN HC_2H_5$
$(CH_3)_3 SiN (C_2H_5)_2$
$[(CH_3)_3 Si]_2$ NH
$[(CH_3)_3 Si]_2 NCH_3$
$CH_3[(CH_3)_2 SiNH]_n Si (CH_3)_3$ n = 2, 3
$[C_2H_5 (CH_3)_2 Si]_2$ NH
$[(CH_3)_3 SiNH Si] (CH_3)_2$.

3. Procédé suivant la revendication 2, caractérisé en ce que la quantité des siloxanes et/ou des silazanes insufflés représente de 3 à 15% en volume.

4. Procédé suivant l'une des revendications précédentes, caractérisé en ce qu'il consiste à insuffler en plus des diènes et/ou des alcènes et/ou des cycloalcanes dans la région de la décharge luminescente.